**Europäisches Patentamt**

**European Patent Office**

**Office européen des brevets**

(19)

(11) Publication number : **0 481 927 A1**

## (12) EUROPEAN PATENT APPLICATION

(21) Application number : **91830413.0**

(22) Date of filing : **04.10.91**

(51) Int. Cl.⁵ : **F04B 9/06,** F16D 5/00,
F16D 3/72

(30) Priority : **17.10.90 IT 4013390**

(43) Date of publication of application :
**22.04.92 Bulletin 92/17**

(84) Designated Contracting States :
**CH DE DK ES FR GB LI SE**

(71) Applicant : **FASA POMPE S.r.l.**
**Via Arte del Trucciolo, 3/5**
**I-41012 Carpi (Modena) (IT)**

(72) Inventor : **Tirelli, Lamberto**
**Via C. Arfini, 20**
**I-42100 Reggio Emilia (IT)**

(74) Representative : **Lanzoni, Luciano**
**BUGNION S.p.A. Via Emilia Est, 25**
**I-41100 Modena (IT)**

(54) **A variable flow water jet cleaner.**

(57)    The invention relates to a variable flow-rate
water jet cleaner, of the volumetric type, and
preferably of the piston type, with a command
shaft (5) and an eccentric pivot (6), in its turn
drawn in rotation by a drive shaft (7). The
command shaft (5) is rotatably coupled on the
driveshaft (7) with a prefixed eccentricity, and
said command shaft (5) is mechanically solid in
rotation with said drive shaft (7) by means of the
interpositioning of a junction element (a cylin-
drical helical spring (8)) able to create between
the two a torque whose intensity grows as the
relative rotation between the command shaft (5)
and the drive shaft (7) increases.

Fig.1

EP 0 481 927 A1

The invention relates to a variable flow water jet cleaner.

It is preferably of the volumetric piston type and is used in particular, but not exclusively, as a pump for so-called water jet cleaners.

These latter are machines used for the cleaning of a wide range of objects, such as vehicles, by means of jets of water of the required characteristics. With respect to the various uses, different needs arise and, in some cases, these needs are incompatible. For example, a jet may be needed which is of an elevated kinetic energy, wherever a strong concentrated mechanical action is required to detach the dirt, just as a constant flow of water at low pressure may be necessary to carry out a simple washing or recipient-filling action.

In consideration of the the relatively elevated pressures which must be reached, a piston type of pump has been used in water jet cleaners, in particular the radial piston with fixed piston block.

This type of pump is perfectly adequate for the needs of water jet cleaners in the sense that if it is correctly dimensioned, it can provide, according to its characteristics, the necessary maximum pressure and flow.

Structurally, however, pumps of this type, while able to function efficiently in the hardest 1 conditions envisaged, for example when maximum pressure is required, are not able to function economically satisfactorily in other conditions, such as when, for example, a very low pressure with high flow rate is needed.

This drawback in the prior art is further evidenced by the fact that, normally because of problems connected with simplicity, such pumps are powered by means of motors able to produce a constant revolution rate. It is common practice to use pumps of considerable power, envisaging that the regulation of the water jet will be done by means of devices such as a pressure reducer or a regulating nozzle. In the prior art this necessitates the use of machines, pumps and motors, somewhat oversized in relation to the work requirements, which usually demand from the jet cleaner pump supplies such as lowest pressure with highest flow and highest pressure with modest flow.

The present invention, as characterised in the claims which follow, proposes to overcome the drawbacks and lacks in the prior art by means of a variable flow water pump which is functionally and constructively extremely simple.

One advantage of the present invention is the ability of the pump to regulate its performance automatically with respect to the requirements as expressed at the outlet of the water, that is by the nozzle regulation etc.

Further characteristics and advantages of the invention will better emerge from the detailed description which follows, of a preferred but not exclusive embodiment here illustrated purely in the form of a non-limiting example in the accompanying drawings, in which:

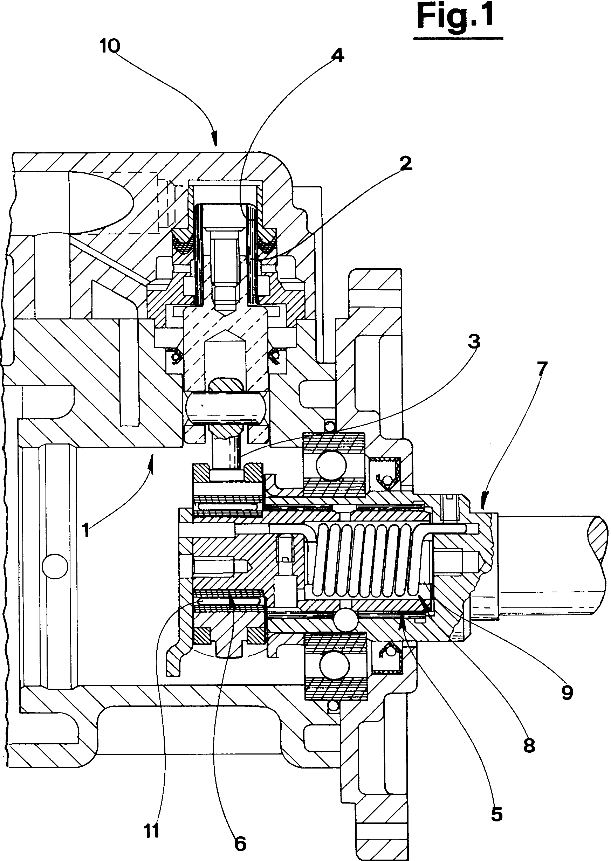

– Figure 1 shows a partial and schematic section along a plane containing the rotation axis;

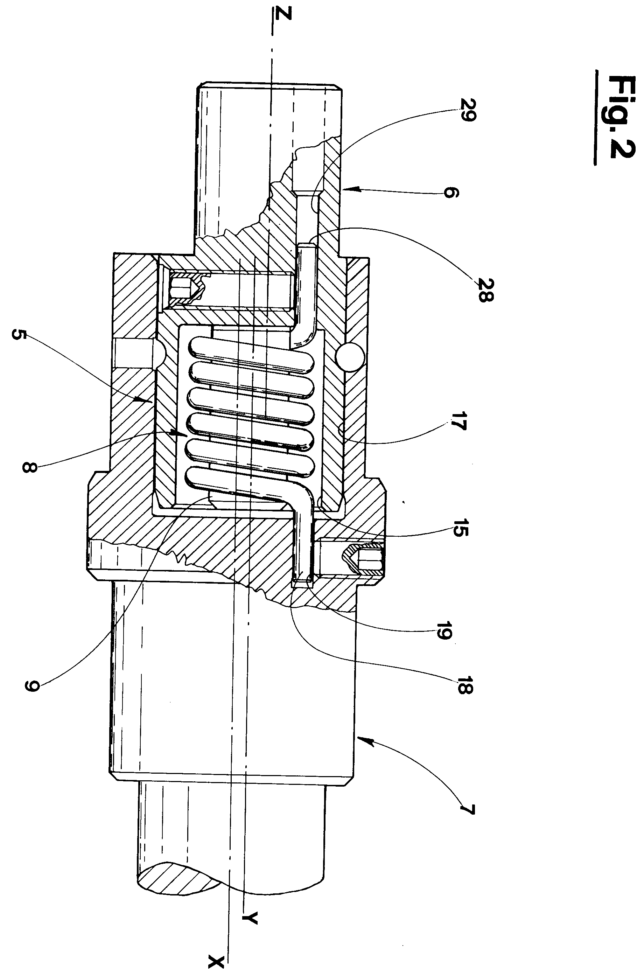

– Figure 2 shows, schematically, the part of Figure 1 concerning the drive shaft and the command shaft of the pump;
– Figures 3, 4 and 5 show schematically three views from the left of Figure 2 relative to three different operative configurations.

With reference to the figures, the piston block 10 of a radial piston volumetric pump is coupled to a motor, not represented in the figure, by means of a drive shaft 7. The piston block 10 is of the fixed piston block type. The single piston 2 is commanded in its alternate movement internally to the cylinder 4 by a system comprising a rod 3 mounted, through a bearing 11, on an eccentric pivot 6. Said eccentric pivot 6 is solidly associated with a command shaft 5, with respect to which it is located parallel with an eccentricity that is clearly indicated in the illustrations as the distance between the "Z" axis, which is the axis of the eccentric pivot 6, and axis "Y", which is the axis of the command shaft 5.

The command shaft 5, at the opposite end from that having the eccentric pivot 6, is rotatably coupled with possibility of relative rotation internally to a cylindrical cavity 17 bored into the drive shaft 7. The cylindrical cavity 17 is eccentrically disposed with respect to rotation axis "X" of the drive shaft 7. In fact, the axis of said cylindrical cavity 17, coinciding with axis "Y" of the command shaft 5 which is coupled to it, is located parallel to and at a prefixed distance from axis "X". The command shaft 5 and the drive shaft 7 are not reciprocally free to rotate one with respect to the other, but are solid in rotation through the interpositioning of a special junction element constituted, in the example, by a cylindrical helical spring 8 coaxially disposed to axis "Y" and fixed at one of its ends 18 to the drive shaft 7 and with its other end 28 to the command shaft 5. In particular, end 18 comprises a straight length of spring inserted into a hole 19 bored into the drive shaft 7 with its axis parallel to axis "X". The other end 28 also comprises a straight length of spring inserted into a hole 29 bored into the body of command shaft 5 and of the eccentric pivot 6 which is connected to it, with axis parallel to axis "Y" and thus also axis "Z". The cylindrical helical spring 8 is mainly housed and with an abundant fixed radial clearance internally to a cylindrical cavity 15 bored into the command shaft 5 coaxially to the "Y" axis. Internally to said cylindrical cavity 15 a cylindrical pivot 9 is coaxially arranged which is inserted internally to the cylindrical helical spring 8. The radial clearance existing between the diameter of the cylindrical pivot 9 and the internal diameter of the cylindrical helical spring 8 in rest position is prefixed. The cylindrical helical spring 8 is thus disposed to work in torsion between the drive shaft 7 and the the command shaft 5 in such a way that between the two there is created, depending on the relative rotation assumed to begin from a prefixed reference position, a torque whose entity depends on the entity of the said relative rotation and which grows as the relative rotation increases. In particular, the whole mechanism is designed in such a way that the eccentric pivot 6 is disposed relatively, with respect to the drive shaft 7, corresponding to the maximum eccentricity position Emax when the cylindrical helical spring 8 is in rest position, or nearly in rest position, that is, when the torque transmitted from the drive shaft 7 to the command shaft 5 is nothing or in any case small with respect to the maximum. Obviously, the situation described corresponds to that of the piston's 2 maximum travel on every cycle and therefore maximum possible range.

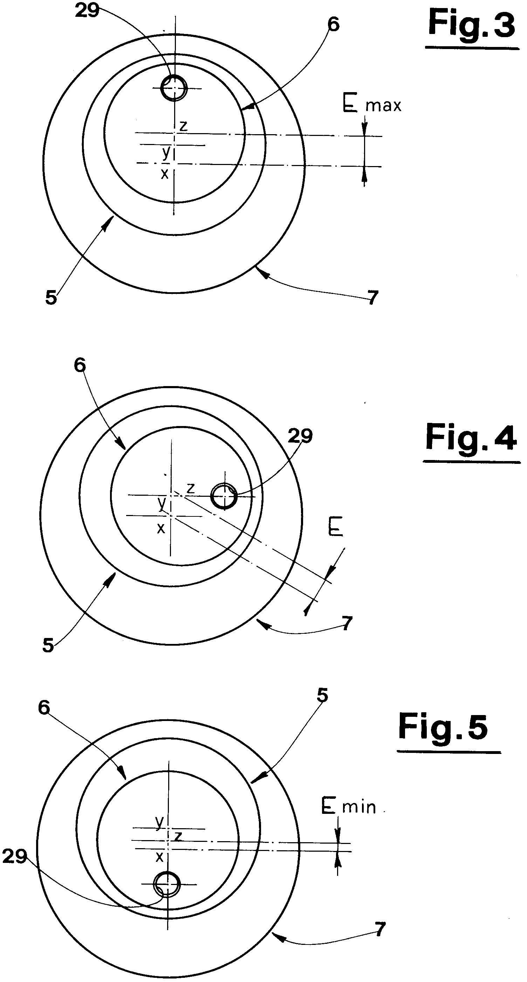

In Fig. 5 the opposite configuration to the one described is represented; it is obtained by rotating the command shaft 5 by 180° around axis "Y" internally to the cylindrical cavity 17 of the drive shaft 7. The eccentricity between the eccentric pivot 6 and the drive shaft 7 is in this case the minimum Emin, being determined by the difference between the eccentricity of the cylindrical cavity 17 ("Y" axis) with respect to the drive shaft 7 ("X" axis) and the eccentricity of the eccentric pivot 6 ("Z" axis) with respect to the command shaft 5 ("Y" axis). To this minimum eccentricity corresponds the minimum travel possible of the piston 2 and thus the minimum range possible; a range which can even be nothing when the two above-described eccentricities are equal.

In Fig. 4 an intermediate situation is represented corresponding in particular to a case in which the command shaft 5 is positioned internally to the cylindrical cavity 17 and rotated around the "Y" axis to 90° with respect to the position indicated in Fig. 3. In this case the eccentricity assumes a value of E intermediate between Emax and Emin.

The establishment, during pump functioning, of one of the infinite configurations possible between the two limit configurations of Fig. 3 and Fig. 5, is determined only by the entity of the torque to which the cylindrical helical spring 8 is subjected. This means that whit constant "entrance" conditions (shaft 7 driven by an electric motor with constant revolutions) the torque entity operating on the cylindrical helical spring 8 is determined solely by the charge situation and therefore by the conditions of use dictated by the post-pump elements (eg the pressure reducer or the nozzle). Thus the maximum flow will be obtainable, depending on the torque rigidity of the cylindrical helical spring 8 when conditions of use are the minimum possible, when the cylindrical helical spring 8 is subjected to little torque and is therefore able to maintain a dynamic configuration which is close to that of Fig.3, corresponding to the maximum eccentricity. The minimum flow is obtainable simply by increasing the external charge and therefore twisting the cylindrical helical spring 8 until it reaches a configuration which is near to, or equal to, that illustrated in Fig. 5.

While in the first case illustrated the functioning condition of the pump corresponds to the maximum flow with the minimum pressure, in the second case the functioning condition corresponds to the minimum flow with the maximum pressure.

The adjustement of the flow happens automatically, being directly determined by the entity of the charge.

The functioning characteristics of the invention seem to be particularly suitable for water jet cleaners since they respond to the usual functioning needs of such machines.

## Claims

1. A variable-flow hydraulic pump of the fixed piston-block type, comprising a command shaft 5 having solid to it at least one eccentric pivot 6 to which a piston 2 is mounted, for example by means of a rod 3, which piston 2 travels in a cylinder 4 bored into the piston block 1; wherein said command shaft 5 is rotatably coupled and solid in rotation with a drive shaft 7, to which it is parallel with a prefixed eccentricity and to which it is mechanically solid in rotation by means of a junction element able to create torque between the two, in accordance with the relative rotation assumed to begin from a reference position, which torque's entity depends on the entity of the relative rotation and which grows as the relative rotation increases.

2. A pump as in claim 1, wherein said command shaft 5 is rotatably coupled internally to a cylindrical cavity 17 bored in said drive shaft 7 with said prefixed eccentricity with respect to the axis of the drive shaft 7 itself; wherein it is envisaged that the said junction element shall comprise a helical spring 8 disposed with its longitudinal axis parallel to the axes of the said command shaft 5 and drive shaft 7, and wherein it is envisaged that said junction element shall be fixed with one end to the command shaft 5 and with its other end to the drive shaft 7.

3. A pump as in claim 1, wherein said cylindrical helical spring 8 is coaxially disposed with respect to the said command shaft 5; wherein it is envisaged that the said spring 8 shall be, for the most part, housed, with prefixed radial clearance, coaxially internally to a cylindrical cavity 15 bored in its turn coaxially internally to the said command shaft 5.

4. A pump as in claim 3, wherein internally to the said cylindrical helical spring 8 a cylindrical pivot 9 is coaxially disposed which pivot's 9 diameter is prefixedly relative to the internal diameter of the spring 8 when said spring is at rest.

5. A pump as in claim 1, wherein said command shaft 5 and said drive shaft 7 are reciprocally fixed and phased by means of said junction element in such a way that the minimum eccentricity between the axis of the eccentric pivot 6 and the axis of the drive shaft 7 occurs when the minimum torque is established, or near to such a torque, on the said drive shaft 7.

## Fig.1

Fig. 2

29

6

$E_{max}$

**Fig.3**

z

y

x

5

7

6

29

z

y

x

$E$

5

7

**Fig.4**

6

5

$E_{min}$

y

z

x

29

7

**Fig.5**

European Patent
Office

**EUROPEAN SEARCH REPORT**

Application Number

EP    91 83 0413

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 259 153 (CONOVER)<br>* page 1, left column, line 43 - right column, line 27 *<br>--- | 1,5 | F04B9/06<br>F16D5/00<br>F16D3/72 |
| A | DE-A-1 914 778 (BROWN, BOVERI & CIE)<br>* page 5; figure *<br>--- | 1,2,4,5 | |
| A | GB-A-550 247 (THOMPSON PRODUCTS)<br>* the whole document *<br>--- | 1,3,5 | |
| A | FR-A-2 640 001 (PEAUGER)<br>* page 3, line 7 - page 9, line 21; figures *<br>--- | 1,5 | |
| A | DE-A-2 224 463 (ERDMANN)<br><br>----- | | |
| | | | **TECHNICAL FIELDS SEARCHED (Int. Cl.5)**<br><br>F04B<br>F16D<br>F16H |

The present search report has been drawn up for all claims

| Place of search | Date of completion of the search | Examiner |
|---|---|---|
| THE HAGUE | 05 FEBRUARY 1992 | VON ARX H.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)